# EUROPEAN PATENT APPLICATION

(11) **EP 4 761 076 A1**
(43) Date of publication of application: **17.06.2026**
(21) Application number: 24307087.7
(22) Date of filing: 12.12.2024
(51) Int. Cl.: H02K 9/06, H02K 9/08, H02K 9/197, H02K 5/18, H02K 5/20

(54) **SELF-VENTILATED OPEN TRACTION MOTOR AND RAIL VEHICLE EQUIPPED WITH SUCH A MOTOR**

(71) Applicant: ALSTOM Holdings, 93400 Saint-Ouen-sur-Seine (FR)
(72) Inventor: BOUALEM, Benali, 25660 SAONE (FR)
(74) Representative: Plasseraud IP

(57) **Abstract**

A self-ventilated open traction motor (10) comprises a stator (20), a rotor (25) separated from the stator (20) by an air-gap (125), a casing (15) extending along a rotation axis (X'X) of a shaft (65) of the rotor (25) and comprising an air inlet flange (15A) and an air outlet flange (15B), at least one stator cooling channel (135) in fluidic connection with at least one stator air inlet (30) of the air inlet flange (15A) and at least one air outlet (40) of the air outlet flange (15B), the air-gap (125) being in fluidic connection with at least one rotor air inlet (35) of the air inlet flange and with the at least one air outlet, and a main fan (45). The motor (10) further comprises a closed air pathway (107) for cooling the rotor (25) comprising at least one rotor cooling channel (75) provided in the rotor (25) and circulating means (110) for circulating air contained in the closed air pathway (107).

## Description

The present invention concerns a self-ventilated open traction motor and a rail vehicle equipped with such a motor.

In the field of electric motors, in particular for rail vehicles, it is known to use cooling devices circulating an external fluid in the motor, for example air surrounding the motor, in order to cool the rotor and/or a stator of the motor.

To this end, the motor may comprise a fan coupled to the shaft of the rotor at an outlet end of a casing of the motor.

When the fan rotates, air is drawn from an inlet end of the casing towards the outlet end. The airflow may pass through the air-gap between the stator and the stator as well as through one or more stator cooling channels and/or one or more rotor cooling channels.

This allows a very effective cooling of the different parts of the motor.

However, as the rotation speed of the shaft increases, the airflow in the rotor cooling channel(s) increases, to the detriment of the airflow in the stator cooling channel(s) which decreases.

As a result, the efficiency of the cooling of the stator depends on the rotational speed of the rotor and is reduced at high rotational speeds.

Furthermore, pollution sucked with the airflow circulating in the rotor cooling channel(s) may cause clogging of the rotor cooling channel(s). In such a case, the rotor is no longer cooled by an airflow, which may cause over-heating of the rotor. As a consequence, the rotor cooling channel(s) must be cleaned during general engine maintenance, and the engine maintenance intervals cannot be extended.

In addition, resonances in the rotating rotor channels are associated with unwished noise. This noise can induce internal resonances in the motor in interaction with other cavities such as the stator cooling channels and/or the air-gap. The noise can also propagate outside the motor.

Thus, one aim of the invention is to provide a self-ventilated open traction motor allowing efficient cooling in a wide range of rotation speed of the rotor, as well as reduced maintenance operations and reduced noise.

To this end, the invention relates to a self-ventilated open traction motor comprising:
- a stator,
- a rotor separated from the stator by an air-gap,
- a casing extending along a rotation axis of a shaft of the rotor between a first end and a second end and comprising an air inlet flange at the first end and an air outlet flange at the second end,
- at least one stator cooling channel in fluidic connection with at least one stator air inlet of the air inlet flange and at least one air outlet of the air outlet flange,
- the air-gap being in fluidic connection with at least one rotor air inlet of the air inlet flange and with the at least one air outlet,
- a main fan configured for circulating air from the at least one rotor air inlet and from the at least one stator air inlet towards the at least one air outlet,
the motor being characterized in that the motor further comprises:
a) a closed air pathway for cooling the rotor comprising at least one rotor cooling channel provided in the rotor, and
b) circulating means for circulating air contained in the closed air pathway.

Due to the provision of a closed air pathway for cooling the rotor in the rotor rather than an open air pathway as in prior art solutions, no air circulates from the air inlet towards the air outlet through the rotor cooling channel(s).

As a consequence, the rotor cooling channel(s) cannot get dirty due to admission of polluted air and the air flow in the closed air cooling channel does not depend on the rotor rotational speed. Hence, maintenance can be reduced and the cooling of the stator does not depend on this rotor rotational speed, unlike for prior art motors.

Further, noise is reduced since the airflow in the rotor cooling channel(s) is independent from the airflows in the air-gap and in the stator cooling channel.

The circulating means for circulating the air contained in the closed air pathway allow thermal transfers form this air towards other parts of the motor in thermal contact with the closed air pathway, in particular on the rotor air inlet side and/or on the air outlet side. Thus, the rotor is cooled down due to heat transfers not only towards the shaft and/or the air-gap but also towards the air contained in the closed air pathway, which contributes to transfer the excess heat outside the closed air pathway.

According to other advantageous aspects of the invention, the self-ventilated open traction motor comprises one or more of the following features, taken in isolation or in any technically possible combination:
- the closed air pathway further comprises two plenum spaces located on either side of the rotor along the rotation axis, the or each rotor cooling channel leading to both plenum spaces, and closing means for closing at least one of a fluidic connection between one of the plenum spaces and the at least one rotor air inlet and a fluidic connection between the other plenum space and the at least one air outlet;
- at least one wall of the at least closed air pathway comprises at least one surface provided with a plurality of external and/or internal cooling fins configured to be in direct contact with a gap airflow to circulate in and/or having circulated the air-gap, and/or with an internal airflow to circulate in the closed air pathway;
- the internal and/or external cooling fins are positioned on the closing means;
- the main fan is coupled to the shaft of the rotor;
- the circulating means comprises at least one internal fan;
- at least one internal fan is a centrifugal fan;
- each of the at least one internal fan is positioned in the vicinity of one of the at least one air outlet and the rotor air inlet along the direction of the rotation axis;
- the self-ventilated open traction motor further comprises a plurality of identical internal fans positioned symmetrically with respect to a plane of symmetry of the rotor orthogonal to the rotation axis;
- the air inlet flange comprises an air deflector configured for guiding an airflow from the at least one rotor air inlet towards an external surface of the closed air pathway.

The invention further relates to a rail vehicle comprising at least one self-ventilated open traction motor according to any of the preceding embodiments.
Figure 1 is a half-sectional view of an embodiment of a self-ventilated open traction motor according to the invention in a first plane comprising the rotation axis of the rotor.
Figure 2 is a sectional view of an embodiment of the closed air pathway and of the rotor of the self-ventilated open traction motor of figure 1 in a second plane AA perpendicular to the rotation axis of the motor.
Figure 3 is a zoomed view of part of figure 2.
Figure 4 is the same zoomed view as in figure 2 but for a second embodiment of a motor according to the invention.

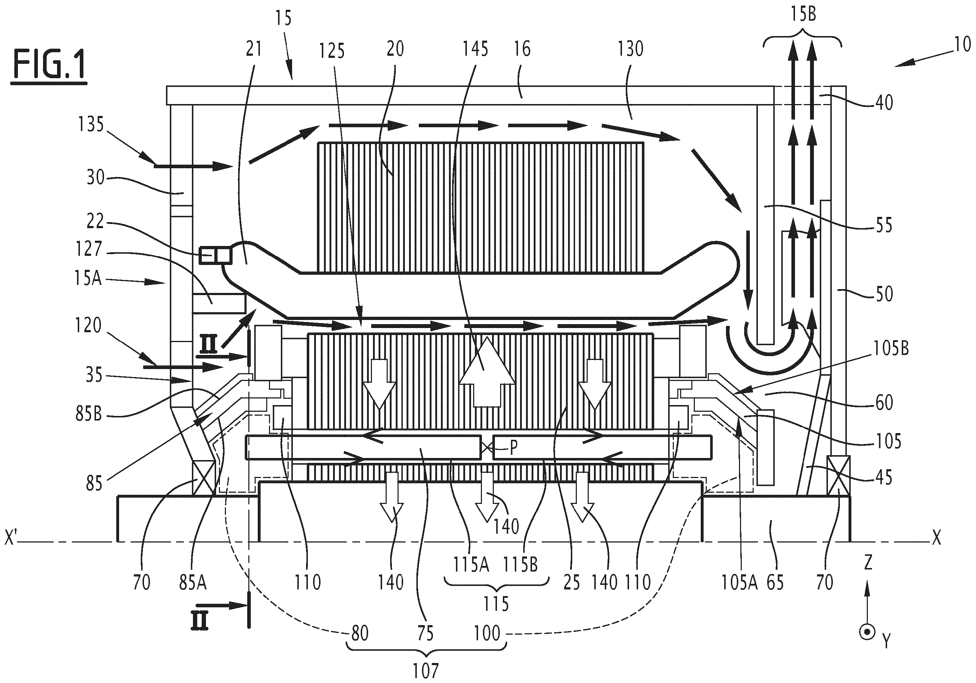

An embodiment of a self-ventilated open traction motor 10 according to the invention is described in reference to figure 1.

The motor 10 is intended for a vehicle (not represented) such as a rail vehicle.

The motor 10 comprises a casing 15 enclosing a stator 20, fixed relative to the casing 15 and a rotor 25 having a rotation axis X'X.

In the case of figure 1, the stator 20 comprises a plurality of coils 21 and coils connecting means 22.

The casing 15 extends along the rotation axis X'X of a shaft 65 of the rotor 25 between a first end and a second end.

The casing 15 comprises an air inlet flange 15A at the first end and an air outlet flange 15B at the second end.

In particular, as shown in figure 1, a lateral wall 16 of the casing can extend along the rotation axis X'X between the air inlet flange 15A at the first end and the air outlet flange 15B at the second end.

The air inlet flange 15A comprises at least one stator air inlet 30 positioned distally radially relative to the rotation axis X'X.

The stator air inlet 30 is configured to allow air to flow from the outside of the motor 10 towards the stator 20.

The stator air inlet 30 is for example annular.

The air inlet flange 15A comprises at least one rotor air inlet 35 positioned proximally radially relative to the rotation axis X'X.

The rotor air inlet 35 is configured to allow air to flow from the outside of the motor 10 towards the rotor 35.

The rotor air inlet 35 is for example annular.

The air outlet flange 15B comprises at least one air outlet 40.

In the embodiment of figure 1, the air outlet 40 is formed in the lateral wall 16 of the casing 15.

The motor 10 comprises a main fan 45 configured for circulating air from the at least one stator air inlet 30 and from the at least one rotor air inlet 35 towards the at least one air outlet 40.

The main fan 45 thus allows self-ventilation of the motor 10.

Advantageously, the main fan 45 is enclosed between an external wall 50 of the air outlet flange 15B extending perpendicularly to the rotation axis X'X, and an inner wall 55 of the air outlet flange 15B substantially parallel to the external wall 50, as shown in figure 1. In this case, at least one opening 60 is provided in the inner wall 55 for allowing air to flow through the inner wall 55 towards the air outlet 40.

The opening 60 is for example annular.

This provision allows air to be channeled more efficiently and thus a more efficient cooling of the motor 10.

Advantageously, the main fan 45 is coupled to the rotor 25, in particular to a rotor shaft 65 extending along the rotation axis X'X, as shown in figure 1.

The rotor shaft 65 is rotationally coupled to the casing 15 by means of bearings 70.

At least one rotor cooling channel 75 is provided in the rotor 25.

The rotor cooling channel 75 advantageously extends in the rotor 25 in a direction parallel to the rotation axis X'X between two ends of the rotor along this axis, as shown in figure 1.

The rotor cooling channel 75 is for example cylindrical.

Advantageously, a plurality of rotor cooling channels 75 are provided in the rotor 25.

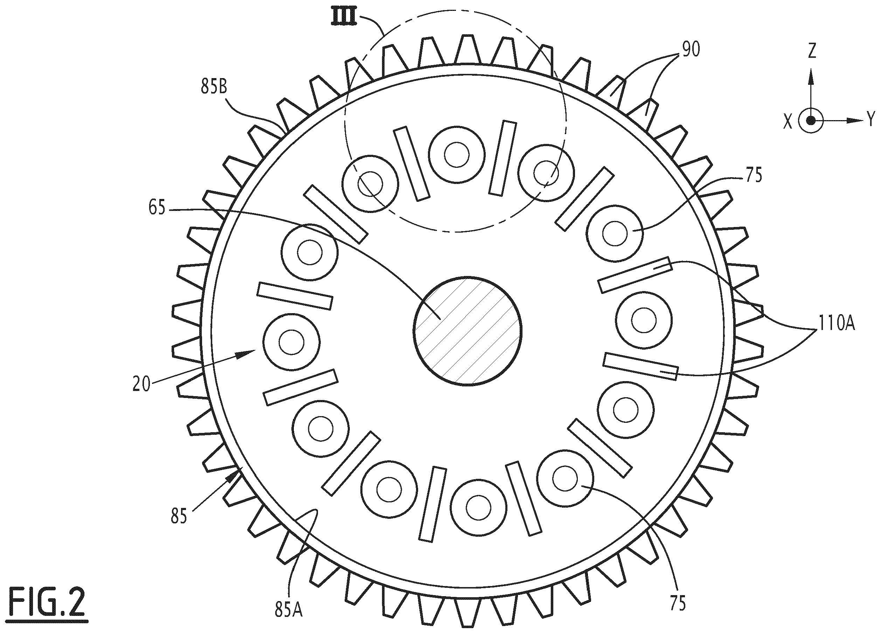

In this case, the rotor cooling channels 75 may be evenly distributed in the rotor 25 around the rotation axis X'X, as shown in figure 2.

In the embodiment of figure 1, each of the rotor cooling channels 75 opens on a first plenum space 80 on a first side along the rotation axis X'X.

More generally, at least one rotor cooling channel 75 can open on the first plenum space 80 on the first side along the rotation axis X'X.

In the example of figure 1, the first plenum space 80 is delimited by the rotor 25, a part of the air inlet flange 15A located between the rotation axis X'X and the rotor air inlet 35 and a first closing element 85 secured to the casing 15.

The first closing element 85 is configured for preventing air to flow from the rotor air inlet 35 towards the rotor cooling channels 75 while allowing the rotation of the rotor 25.

The first closing element 85 is for example at least partially metallic.

To this end, the first closing element 85 can be spaced apart from the rotor 25 by a labyrinth separating gap, a labyrinth seal being thus defined between the first closing element 85 and the rotor 25. The separating gap is typically less than 5mm or less than 1 mm.

Alternatively, the first closing element 85 comprises a bearing and a joint (not represented) for its rotational coupling to the rotor 25, the joint being for example a labyrinth joint.

The first closing element 85 is also configured for allowing heat transfer between air contained in the first plenum space 80 and in direct contact with an internal surface 85A of the first closing element 85 and a surrounding fluid, such as air, in direct contact with an external surface 85B of the first closing element 85 opposite the internal surface 85A.

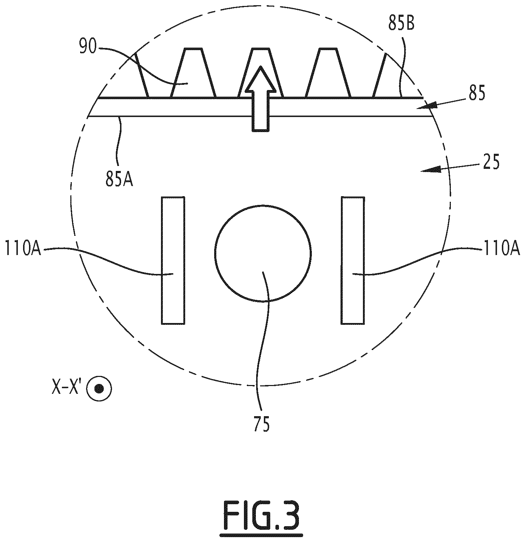

The external surface 85B can be provided with a plurality of external cooling fins 90, as shown in figures 2 to 4.

More generally, at least one surface of at least one wall of the closed air pathway 107 may be provided with external cooling fins 90.

The external cooling fins 90 are adapted for allowing increased heat transfer between the external face 85B and the fluid surrounding the external face 85B faces.

The external cooling fins 90 are for example at least partially metallic.

The external cooling fins 90 are for example frustoconical.

Advantageously, the external cooling fins 90 are evenly distributed over the external surface 85B around the rotation axis X'X.

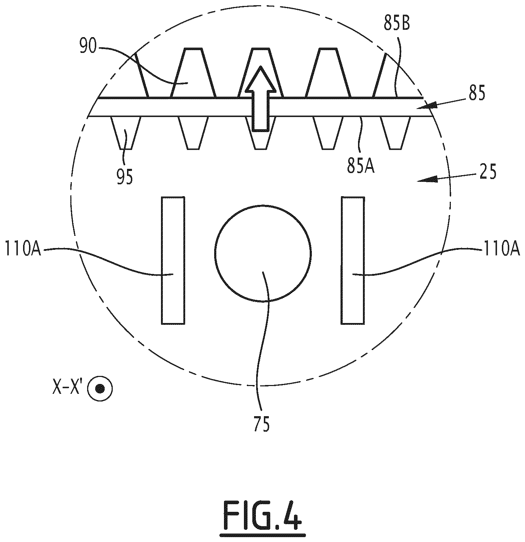

The internal surface 85A can be provided with a plurality of internal cooling fins 95, as shown in figure 4.

More generally, at least one surface of at least one wall of the closed air pathway 107 may be provided with internal cooling fins 95.

The internal cooling fins 95 are adapted for allowing increased heat transfer between the air in the first plenum space 80 and the internal surface 85A.

The internal cooling fins 95 are for example at least partially metallic.

The internal cooling fins 95 are for example frustoconical.

Advantageously, the internal cooling fins 95 are evenly distributed over the internal surface 85A around the rotation axis X'X.

In a particular embodiment, the first closing element 85 comprises both internal cooling fins 95 and external cooling fins 90.

In this case, as shown in figure 4, the internal cooling fins 95 can be similar to but smaller than the external cooling fins 90.

As shown in figure 4, each internal cooling fins 95 can radially face a respective external cooling fin 90 relative to the rotation axis X'X. This provision allows a particularly efficient cooling.

Advantageously, the positions and the shapes of the internal and external cooling fins 95, 90 are chosen in order to maximize an exchange surface with a respective surrounding fluid, taking into account geometrical constraints imposed for the motor 10.

In the embodiment of figure 1, each of the rotor cooling channels 75 opens on a second plenum space 100 on a second side along the rotation axis X'X, delimited by the rotor 25, a part of the air outlet flange 15B located proximal the rotation axis X'X and a second closing element 105.

More generally, at least one rotor cooling channel 75 can open on the second plenum space 100 on the second side along the rotation axis X'X. In the example of figure 1, the second plenum space 100 is delimited by the rotor 25 and a part of the inner wall 55 located between the rotation axis X'X and the opening 60.

The second closing element 105 is analogous to the first closing element 85 *mutatis mutandis.*

In particular, the second closing element 105 is configured for preventing air to flow from the rotor cooling channels 75 towards the air outlet 40, while allowing the rotation of the rotor 25.

The second closing element 105 is also configured for allowing heat transfer between air contained in the second plenum space 100 and in direct contact with an internal surface 105A of the second closing element 105 and a surrounding fluid, such as air, in direct contact with an external surface 105B of the second closing element 105 opposite the internal surface 105A.

The rotor cooling channels 75, the first plenum space 80 and the second plenum space 100 form a closed air pathway 107 in the motor 10, in particular thank to the first closing element 85 and the second closing element 105 in the embodiment of figure 1.

More generally, the motor 10 comprises a closed air pathway 107 comprising at least one of the at least one rotor cooling channel 75 provided in the rotor 25, the closed air pathway 107 being configured for cooling the rotor 25.

In a particular embodiment, as shown in figure 1, the closed air pathway 107 comprises at least one rotor cooling channel 75, advantageously all the rotor cooling channels 75, and two plenum spaces 80, 100 located on either side of the rotor 25 along the rotation axis X'X, each rotor cooling channel 75 leading to both plenum spaces 80, 100.

In this case, the motor 10 comprises closing means, for example the first closing element 85 and/or the second closing element 105, each configured for closing at least one of a fluidic connection between one of the plenum spaces 80, 100 and the at least one rotor air inlet 35 and a fluidic connection between the other plenum space 80, 100 and the at least one air outlet 40.

The motor 10 further comprises circulating means configured for circulating air contained in the closed air pathway.

The circulating means may comprise at least one internal fan 110.

The internal fan 110 can be positioned such that blades 110A of the internal fan 110 may rotate in the first plenum space 80 or in the second plenum space 100.

More generally, each of the at least one internal fan 110 can be positioned in the vicinity of one of the at least one air outlet 40 and the rotor air inlet 30 along the direction of the rotation axis X'X.

In a particular embodiment, the blades 110 A can alternate with the cooling channels 75 around the rotational axis, as shown in figure 2.

The internal fan 110 is for example a centrifugal fan.

Advantageously, the internal fan 110 is coupled to the rotor shaft 65.

The circulating means are advantageously symmetrical with respect to a plane of symmetry YZ of the rotor 20 orthogonal to the rotation axis X'X.

In this case, an internal airflow 115 in the closed air pathway can present one or more stagnation point P in each cooling channel 75 along the direction of the rotation axis X'X. Such a stagnation point P is associated with a local speed of the air equal to zero, and thus to create relatively independent internal airflows 115A and 115B on either sides of the stagnation point P relative to the direction of the rotation axis X'X.

In the embodiment of figures 1 to 4, the circulating means comprise two identical internal fans 110. Each internal fan 110 is positioned at a respective side of the rotor 25 along the rotation axis X'X.

This provision allows the internal airflow 115 to comprise two symmetrical internal airflows 115A, 115B, such that the internal airflow 115 presents one central stagnation point P in each cooling channel 75 along the direction of the rotation axis X'X.

The internal airflow 115, when flowing from the cooling channels 75 towards the first plenum space 80 and the second plenum space 100, carries excess heat from the rotor 25 towards these plenum spaces 80, 100. The excess heat is further transferred to the internal surface 85A (respectively 105A) and then to the external surface 85B (respectively 105A) of the first (respectively second) closing element 85 (respectively 105).

In case at least one surface of at least one wall of the closed air pathway 107 is provided with internal cooling fins 95, the internal cooling fins 95 may be configured to be in direct contact with the internal airflow 115 to circulate or circulating in the closed air pathway 107. This allows increased thermal transfers.

The external surface 85B and the external surface 105B are in thermal contact with a gap airflow 120 flowing from the rotor air inlet 35 towards the air outlet 40 through an air-gap 125 separating the rotor 25 and the stator 20.

The air-gap 125 is in fluidic connection with at least one rotor air inlet 35 of the air inlet flange 15A and with the at least one air outlet 40.

The gap airflow 120 is driven by the main fan 45 and is independent from the internal airflow 115, which is enclosed in the closed air pathway 107.

The thermal transfers between the internal airflow 115 and the gap airflow 120 through both the first closing element 85 and the second closing element 105 allow to dissipate excess heat from the rotor 25 and to carry this excess heat up to the air outlet 40.

In case the air outlet flange 15B comprises the opening 60, the positioning of the opening 60 close to the second closing element 105 optimizes the thermal transfer between the gap airflow 120 and the second closing element 105.

In the same manner, the positioning of the rotor air inlet 35 close to the first closing element 85 optimizes the thermal transfer between the gap airflow 120 and the first closing element 85.

In case at least one surface of at least one wall of the closed air pathway 107 is provided with external cooling fins 90, the external cooling fins 90 may be configured to be in direct contact with the gap airflow 120 to circulate in and/or having circulated in the air-gap 125. This allows increased thermal transfers.

Advantageously, an air deflector 127 is provided on the air inlet flange 15A.

The air deflector 127 is configured for guiding the gap airflow 120 towards the first closing element 85, thus increasing the thermal transfer from the internal airflow 115 to the gap airflow 120.

The motor further comprises at least one stator cooling channel 130 in fluidic connection with the at least one stator air inlet 30 and the at least one air outlet 40.

In the example of figure 1, the stator cooling channel 130 is delimited by the stator 20, the later wall 16 of the casing 15, the air inlet flange 15A and the inner wall 55.

Advantageously, the stator cooling channel 130 is rotationally invariant relative to the rotation axis X'X.

The main fan 45 allows to drive a stator airflow 135 from the stator air inlet 30 towards the air outlet 40, configured for cooling the stator 20.

The stator airflow 135 is independent from the internal airflow 115.

If applying, the deflector 127 separates the stator airflow 135 from the gap airflow 120.

The independency between both the stator airflow 135 and the gap airflow 120, and the internal airflow 115 allows to achieve effective and homogeneous cooling of the stator at all nominal rotational speeds of the rotor 25.

On the contrary, when the air flowing through the rotor cooling channels 75 is taken from the air entering the motor through the stator air inlet 30 and/or the rotor air inlet 35 as in prior art, when the rotational speed of the rotor 25 increases, and as a consequence, the stator airflow 135 decreases. Hence, the cooling effect of the stator is undesirably reduced.

To sum up, when the internal fan(s) 110 are rotated, air contained in the closed air pathway circulates and the internal airflow 115 carries excess heat from the rotor 25 towards the first plenum space 80 and the second plenum space 100.

If the main fan 45 is simultaneously rotated, the gap airflow 120 circulates from the rotor air inlet 35 towards the air outlet 40. The gap airflow 120 comes thus in thermal contact with the first closing element 85 and the second closing element 105, allowing heat transfer from the airflow 115 to the gap airflow 120.

The excess heat is consequently carried from the rotor 25 to the air outlet 40.

The internal airflow 115 allows efficient cooling of the rotor 25 despite the fact that the rotor cooling channels 75 are enclosed in a closed air pathway. The cooling effect of the internal airflow 115 is added to heat transfer 140 by thermal conduction towards the rotor shaft 65 and heat transfer 145 by thermal conduction towards the air-gap 125.

Simultaneously, the stator airflow 135 is driven by the main fan 45, allowing cooling the stator 20.

Since the stator airflow 135 and the gap airflow 120 are independent from the internal airflow 115, the cooling effect of the stator 25 is less influenced by the rotational speed of the rotor 25 than in prior art.

## Claims

1. Self-ventilated open traction motor (10) comprising:
- a stator (20),
- a rotor (25) separated from the stator (20) by an air-gap (125),
- a casing (15) extending along a rotation axis (X'X) of a shaft (65) of the rotor (25) between a first end and a second end and comprising an air inlet flange (15A) at the first end and an air outlet flange (15B) at the second end,
- at least one stator cooling channel (135) in fluidic connection with at least one stator air inlet (30) of the air inlet flange (15A) and at least one air outlet (40) of the air outlet flange (15B),
- the air-gap (125) being in fluidic connection with at least one rotor air inlet (35) of the air inlet flange (15A) and with the at least one air outlet (40),
- a main fan (45) configured for circulating air from the at least one rotor air inlet (35) and from the at least one stator air inlet (30) towards the at least one air outlet (40),
the motor (10) being **characterized in that** the motor (10) further comprises:
a) a closed air pathway (107) for cooling the rotor (25) comprising at least one rotor cooling channel (75) provided in the rotor (25), and
b) circulating means (110) for circulating air contained in the closed air pathway (107).

2. Self-ventilated open traction motor (10) according to claim 1, in which the closed air pathway (107) further comprises two plenum spaces (80, 100) located on either side of the rotor (25) along the rotation axis (X'X), the or each rotor cooling channel (75) leading to both plenum spaces (80, 100), and closing means (85, 105) for closing at least one of a fluidic connection between one of the plenum spaces (80, 100) and the at least one rotor air inlet (35) and a fluidic connection between the other plenum space (80, 100) and the at least one air outlet (40).

3. Self-ventilated open traction motor (10) according to any of the preceding claims, wherein at least one wall of the at least closed air pathway (107) comprises at least one surface (85A, 85B, 105A, 105B) provided with a plurality of external and/or internal cooling fins (90, 95) configured to be in direct contact with a gap airflow (120) to circulate in and/or having circulated the air-gap (125), and/or with an internal airflow (115) to circulate in the closed air pathway (107).

4. Self-ventilated open traction motor (10) according to claim 2 and claim 3, wherein the internal and/or external cooling fins (90, 95) are positioned on the closing means (85, 105).

5. Self-ventilated open traction motor (10) according to any of the preceding claims, wherein the main fan (45) is coupled to the shaft (65) of the rotor (25).

6. Self-ventilated open traction motor (10) according to any of the preceding claims, wherein the circulating means comprises at least one internal fan (110).

7. Self-ventilated open traction motor (10) according to claim 6, wherein the at least one internal fan (110) is a centrifugal fan.

8. Self-ventilated open traction motor (10) according to any of claims 6 to 7, wherein each of the at least one internal fan (110) is positioned in the vicinity of one of the at least one air outlet (40) and the rotor air inlet (30) along the direction of the rotation axis (X'X).

9. Self-ventilated open traction motor (10) according to any of claims 6 to 8, further comprising a plurality of identical internal fans (110) positioned symmetrically with respect to a plane of symmetry (YZ) of the rotor (25) orthogonal to the rotation axis (X'X).

10. Self-ventilated open traction motor (10) according to any of the preceding claims, wherein the air inlet flange (15A) comprises an air deflector (127) configured for guiding an airflow (120) from the at least one rotor air inlet (30) towards an external surface (85B) of the closed air pathway (107).

11. Rail vehicle comprising at least one self-ventilated open traction motor (10) according to any of claim 1 to 10.
